# EUROPÄISCHE PATENTSCHRIFT

(11) **EP 0 904 314 B1**
(45) Veröffentlichungstag und Bekanntmachung des Hinweises auf die Patenterteilung: **27.11.2002**
(21) Anmeldenummer: 97925051.1
(22) Anmeldetag: 06.06.1997
(51) Int. Cl.: C08G 75/02

(54) **VERFAHREN ZUR HERSTELLUNG VON SCHWEFELHALTIGEN POLYMEREN**
PROCESS FOR PRODUCING SULPHUR-CONTAINING POLYMERS
PROCEDE DE PREPARATION DE POLYMERES CONTENANT DU SOUFRE

(30) Priorität: 14.06.1996 DE 19623706
(43) Veröffentlichungstag der Anmeldung: 31.03.1999
(73) Patentinhaber: Ticona GmbH, 65451 Kelsterbach (DE)
(72) Erfinder: HAUBS, Michael, D-55545 Bad Kreuznach (DE); WAGENER, Reinhard, D-65439 Flörsheim (DE)
(86) Internationale Anmeldenummer: EP9702931
(87) Internationale Veröffentlichungsnummer: WO97047676

(56) Entgegenhaltungen:
- EP-A- 0 256 757
- EP-A- 0 737 705

## Beschreibung

Die Erfindung betrifft ein Verfahren zur Herstellung von linearen oder verzweigten Polyarylensulfiden, insbesondere von Polyphenyiensulfid (PPS), wobei die Monomere zu einer (teil)polymerisierten Mischung zugegeben werden.

US 4,910,294 beschreibt ein Verfahren zur Herstellung von PPS. Als Monomere werden dihalogenierte, aromatische Kohlenwasserstoffe, insbesondere Dichlorbenzol (DCB), und Natriumsulfid eingesetzt, die in einem hochsiedenden, dipolar aprotischen Lösungsmittel wie N-Methylpyrrolidon (NMP) zur Reaktion gebracht werden. Es müssen beträchtliche Mengen an Lösungsmittel eingesetzt werden, um die Reaktionspartner zur Reaktion zu bringen, da die Reaktionskomponenten Metallsulfid und aromatische Dihalogenverbindung nicht miteinander mischbar sind. Typischerweise werden mindestens 3,5 Mol NMP pro Mol Sulfid eingesetzt.

EP-A-0536684 beschreibt die Herstellung von Polyphenylensulfid in NMP in höheren Konzentrationen als 3,5 Mol NMP pro Mol Sulfid, indem p-Dichlorbenzol zu einer dehydratisierten Mischung aus Natriumsulfid und NMP gegeben wird und die Mischung dann polymerisiert wird. Es werden dennoch Reaktionstemperaturen von 280 °C benötigt und keine repoduzierbar hohen Molmassen, charakterisiert durch die Schmelzeviskosität der Produkte, erreicht.

DE-A-3 237 110 beschreibt ein Verfahren zur Herstellung von niedermolekularem Polyarylensulfid, bei dem ein Alkalisulfid in einem hochsiedenden polaren N-Alkylpyrrolidon-2, vorgelegt und anschließend ein Dihalogenaromat zudosiert wird. Es wird dort ein molares Verhältnis von Lösungsmittel zu eingesetztem Sulfid von minimal 3,1 erreicht. Die Reaktionszeit nach Beginn der Zudosierung beträgt insgesamt 12 h bei mindestens 255 °C.

Die EP-A-0 215 259 beschreibt ein Verfahren zur Herstellung von Polyarylensulfiden aus Dihalogenaromaten und Alkalisulfid in N-Methylcaprolactam, bei dem eine Hälfte der Reaktionsmischung unter leichtem Rückfluß vorgelegt wird. Anschließend wird die zweite Hälfte der Mischung, und zwar inclusive des Lösungsmittels, zudosiert. Das minimal erreichte Verhältnis von Lösungsmittel zu eingesetztem Sulfid beträgt 3,25. Die mittlere Reaktionszeit in der Rührkesselkaskade beträgt 12,5 h.

EP A 0 374 462 beschreibt die Herstellung von Polyarylensulfiden, wobei Sulfid zu einer Mischung aus Dihalogenaromat und polarem Lösungsmittel kontinuierlich zugegeben wird. Das molare Verhältnis von polarem Lösungsmittel zu Sulfid liegt bei ca. 1,1 bis 1,8:1. Die Reaktionszeiten betragen ungefähr 10 bis 15 Stunden.

Wird bei den Verfahren des Standes der Technik weniger Lösungsmittel eingesetzt, so sind Molmasse und Polymerausbeute schlecht; bei höheren Lösungsmittelkonzentrationen ist die Raum-Zeit Ausbeute unbefriedigend. Zur Erzielung befriedigender Raum-Zeit-Ausbeuten wird häufig die Reaktionstemperatur erhöht, was aber vermehrt Nebenreaktionen nach sich zieht.

Es besteht daher die Aufgabe, Polyarylensulfide, über einen weiten Molmassenbereich (z.B. Mw =10000 - 200000 g/mot) in guter Raum-Zeit-Ausbeute bei möglichst milden Reaktionsbedingungen und mit möglichst geringer Verunreinigung durch Nebenprodukte herzustellen.

Es wurde gefunden, daß die Herstellung von, Polyarylensulfiden mit hoher Raum-Zeit-Ausbeute bei einem Gesamt-Lösemittelbedarf von weniger als 300 g Lösungsmittel pro Mol eingesetztem Sulfid bei Reaktionstemperaturen von nicht mehr als 250 °C und kurzen Reaktionszeiten (weniger als 5 Stunden) durchgeführt werden kann, wenn aus aromatischer Dihalogenverbindung und Sulfid in einem polaren Lösungsmittel zunächst ein Präpolymer gebildet wird, das anschließend durch Zugabe von aromatischer Dihalogenverbindung und Sulfid zu einem Polymer mit höherer Molmasse umgesetzt wird.

Gegenstand der Erfindung ist somit ein Verfahren zur Herstellung von Polyarylensulfiden aus mindestens einer aromatischen dihalogenierten Verbindung und mindestens einem Sulfid in einem Lösungsmittel, wobei a) eine Mischung aus aromatischer Dihalogenverbindung und Sulfid polymerisiert wird, b) zu der polymerisierten Mischung aromatische Dihalogenverbindung und Sulfid zugegeben werden und c) die Reaktionsmischung weiter polymerisiert wird und das Verhältnis von Lösungsmittel zu eingesetztem Sulfid bei Abschluß der Reaktion höchstens 300g pro Mol Sulfid oder das molare Verhältnis von Lösungsmittel zu eingesetztem Sulfid bei Abschluß der Reaktion höchstens einen Wert von 3 erreicht.

Polyarylensulfide sind Polymere, die Arylensulfid-Einheiten enthalten. Die Arylen-Bestandteile der Arylensulfid-Einheiten enthalten ein- oder mehrkemige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenanthren. Substituenten sind zum Beispiel C₁-C₆-Alkyl-, C₁-C₆-Alkoxy-, Carboxyl-, Amino- und SulfonsäureGruppen. Verbundene Aromaten sind zum Beispiel Biphenyl oder durch Etherbrücken verbundene Aromaten (Arylenether).

Das bevorzugte Polyarylensulfid ist Polyphenylensulfid.

Als Sulfid für die Herstellung der Polymeren eignen sich anorganische und organische Sulfide. Anorganische Sulfide sind Sulfide der Alkali- und ErdalkaliMetalle, wie Lithiumsulfid, Kaliumsulfid, Calciumsulfid und bevorzugt Natriumsulfid. Es können auch die entsprechenden Hydrogensulfide oder Schwefelwasserstoff eingesetzt werden, gegebenenfalls in Verbindung mit Alkalihydroxiden.
Als organische Sulfide eignen sich salzartige Sulfide mit organischen Kationen. Organische Sulfide im Sinne der Erfindung sind auch solche organischen Schwefelverbindungen, die unter den Reaktionsbedingungen Sulfid- oder Hydrogensulfidanionen freisetzen, wie z. B. Thioacetamid oder Thio-N-Methylpyrrolidon. Die Sulfide können auch mit Kristallwasser eingesetzt werden.

Als aromatische Dihalogenverbindungen eignen sich dihalogenierte aromatische Kohlenwasserstoffe, unter anderem Dihalogenbenzole wie o-, m- und p-Dichlorbenzol, substituierte Dihalogenbenzole wie 2,5-Dichlortoluol, 3,5-Dichlorbenzoesäure, 2,5-Dichlorbenzolsulfonsäure oder 3,5-Dichlorbenzolsulfonsäure oder deren Salze. Aber auch Dihalogennaphthaline wie 1,4-Dibromnaphthalin oder Dihalogendiphenyläther wie 4,4'-Dichlordiphenyläther können eingesetzt werden. Ebenso können Gemische von verschiedenen Arylendihalogeniden eingesetzt werden. Es können auch kleine Mengen (0,2 bis 5 Mol-prozent bezogen auf Dihalogenaromat) polyhalogehierte aromatische Kohlenwasserstoffe eingesetzt werden, um zu verzweigten oder vernetzten schwefelhaltigen Polymeren zu gelangen.

Dihalogenaromaten und Sulfid werden auch als Monomere bezeichnet.

Als Lösungsmittel für die Herstellung des Polymeren eignen sich dipolar aprotische Lösungsmittel vom Amidtyp wie Dimethylformamid (DMF), Dimethylacetamid (DMAc), N-Methylcaprolactam oder N-afkylierte Pyrrolfdone wie N-Methylpyrrolidon (NMP) oder Mischungen davon. Besonders bevorzugt ist NMP.

Unter dem Begriff Präpolymer sind Oligomere oder Polymere zusammengefaßt, die Arylensulfid-Einheiten enthalten. Diese Produkte haben gewöhnlich eine Molmasse, ausgedrückt als Zahlenmittel der Molmasse Mₙ, im Bereich von 500 bis 20000 g/mol. Sie können linear oder verzweigt sein. Auch ist es möglich durch Einsatz substituierter Dihatogenarylverbindungen (z.B. 2,5-Dichlortoluol) substituierte Präpolymere herzustellen. Bevorzugt werden Präpolymere mit Halogen-Endgruppen, insbesondere Chlor-Endgruppen, hergestellt.

Die Herstellung des Präpolymeren in Schritt a), wird im allgemeinen so geführt, daß Sulfid mit Dihalogenverbindungen in polaren Lösungsmittein wie Dimethylsulfoxid, Dimethytformamid (DMF), Dimethylacetamid (DMAc). N-alkylierte Lactame wie N-Alkytcaprolactame, z.B. N-Methylcaprolactam (NMC), N-Alkylpyrrolidone, z.B. N-Methylpyrrolidon (NMP) oder Mischungen davon, unter milden Reaktionsbedingungen, das heißt bei Temperaturen von nicht mehr als 250 °C, umgesetzt wird. Die Masse des eingesetzten Lösungsmittels pro Mol Sulfid beträgt hier 150 g bis 1000 g, bevorzugt 250 g bis 600 g. Für den Fall, daß NMP als Lösungsmittel eingesetzt wird, entspricht dies 1,5 bis 10 Mol NMP pro Mol Sulfid, bevorzugt 2,5 bis 6 Mol NMP pro Mol Sulfid. Es werden 0,9 -1,5 Mol Dihalogenaromat pro Mol Sulfid eingesetzt. Besonders bevorzugt sind 1,05 bis 1,3 Mol, wobei halogenterminierte Präpolymere entstehen. Die Reaktionstemperaturen liegen zwischen 120 °C und 280 °C, bevorzugt zwischen 190 °C und 250 °C. Die Reaktionszeiten in Schritt a) betragen 0,1 bis 5 h, bevorzugt 0,2 bis 2 h. Die Präpotymeren entstehen bei einem Reaktionsumsatz bezogen auf Sulfid von 10 - 98%, bevorzugt bei 30 - 95%, besonders bevorzugt bei 50 - 80%.

Die weitere Zugabe der Monomere in Schritt b) zu der präpolymerisierten Mischung, enthaltend Lösungsmittel, Präpolymer, das Nebenprodukt Salz und nicht umgesetzte Monomere, kann entweder absatzweise oder kontinuierlich erfolgen. Die aromatische Dihalogenverbindung wird als Schmelze oder mit wenig Lösungsmittel mittels einer Dosierpumpe in den Reaktor gepumpt. Die Sulfide können entweder in fester Form durch eine Schleuse oder als Hydratschmelze in flüssiger Form mit Hilfe einer geeigneten Pumpe zugegeben werden. In einer bevorzugten Ausführungsform der Erfindung wird eine homogene Mischung aus Sulfid und Lösungsmittel der Reaktionsmischung mit Präpolymer zugegeben. Die mit den Monomeren zugegebene Lösungsmittelmenge wird so bemessen, daß nach der Zugabe insgesamt nicht mehr als 300 g Lösungsmittel pro Mol Sulfid im Reaktor vorliegen.

Die Masse der zugesetzten Monomere m₁ kann im Verhältnis zu der anfänglich zur Präpolymerherstellung eingesetzten Masse m₂ in weiten Bereichen variiert werden.

Das Massenverhältnis m₁ zu m₂ kann 0,1 bis 10 betragen. Bevorzugt ist ein Massenverhältnis von 0,5 bis 5, besonders bevorzugt von 1 bis 3.

In einer weiteren bevorzugten Ausführungsform der Erfindung erfolgt die Zugabe der Monomere so, daß eine nahezu stationäre Konzentration der Monomere im Reaktionsgemisch aufrechterhalten wird. Das heißt, eine möglichst konstante Monomer-Konzentration wird während der Reaktion aufrechterhalten. In einem solchen stationären Zustand ist die pro Zeiteinheit zugesetzte Monomer-Menge gleich der durch Reaktion verbrauchten Monomer-Menge.

Wird das Sulfid mit Hydratwasser zugegeben, so ist eine Entfernung von Wasser aus der Reaktionsmischung von Vorteil. Die Entwässerung kann in diskreten Schritten oder kontinuierlich erfolgen. Neben Wasser werden auch Dihalogenaromat, Lösungsmittel und etwas H₂S entfernt. Es hat sich als vorteilhaft erwiesen, aus diesem Gemisch Wasser zu entfernen und die restlichen Komponenten wieder dem Reaktor zuzuführen.

Nachdem die Zugabe der Monomeren beendet ist, wird die Reaktionsmischung unter Rühren auspolymerisiert (Schritt c). Die Reaktionsbedingungen können in weiten Grenzen vaniert werden. So können die Reaktionstemperaturen zwischen 120 °C und 280 °C liegen, bevorzugt sind 190 °C bis 250 °C. Die Reaktionszeiten können 20 Minuten bis 20 Stunden betragen. Bevorzugt sind 1 bis 3 Stunden. In einer bevorzugten Ausführungsform der Erfindung beträgt die gesamte Reaktionszeit nicht mehr als 5 Stunden bei Reaktionstemperaturen von höchstens 250 °C.

Alle Phasen der Polymerherstellung können entweder absatzweise oder kontinuierlich geführt werden. Beispielsweise kann die kontinuierliche Reaktionsführung mittels einer Rührkesselkaskade, in einem Strömungsrohr oder einer Kombination beider verwirklicht werden.

Gewöhnlich wird während der Reaktion chemisch gebundenes Hydratwasser freigesetzt. Für die Aufarbeitung kann es vorteilhaft sein, das Reaktionswasser nach Abschluß der Reaktion ganz oder teilweise zu entfernen. Wahlweise kann vor der Aufarbeitung der Reaktorinhalt durch Zugabe von Säuren neutral oder schwach sauer gestellt werden. Geeignete Säuren sind z.B. Essigsäure, Salzsäure oder Kohlendioxid.

Die Abtrennung des Polymeren erfolgt durch einfache Druckfiltration. Aber auch andere Verfahren zur Abtrennung von Feststoffen aus Flüssigkeiten können eingesetzt werden, z.B. Zentrifugieren oder Dekantieren. Es ist auch möglich, die entstandene Suspension in einer Entspannungsverdampung oder Sprühtrocknung aufzuarbeiten. Dabei werden Lösungsmittel und weitere niedermolekulare Substanzen als Hauptbestandteile dampfförmig abgezogen, das Polymer und das Nebenprodukt Salz fallen als weitgehend trockenes Feststoffgemisch an.

Im Falle der Druckfiltration wird der Filtrationsrückstand zweckmäßigerweise mit Lösungsmittel gewaschen, um anhaftende Mutterlaugenreste zu entfernen. Als Resultat dieser Trennoperation erhält man Polymer und Salz als Feststoff und die Mutterlauge. Die Mutterlauge kann direkt zur Herstellung von weiterem Polymer wiederverwendet werden. Das Polymer läßt sich aus dem Feststoff, der auch vorher getrocknet werden kann, durch Aufkochen mit Wasser und anschließende Filtration gewinnen.

Eine Aufarbeitungsvariante besteht darin, daß man die 150 °C bis 240 °C warme Reaktionsmischung unter Druck filtriert, wobei nur das Salz zurückbleibt und das Polymer sich gelöst im Filtrat wiederfindet. Daraus kann das Polymer entweder durch Sprühtrocknung oder durch Kristallisation und anschließende Filtration isoliert werden.

Die Molmassen der Polyarylensulfide lassen sich über die Stöchiometrie der Monomere Sulfid und Dihalogenaromat gezielt einstellen. Im allgemeinen wird das maximale Molekulargewicht dann erreicht, wenn der Dihalogenaromat in einem 2 mol%igen Überschuß bezogen auf Sulfid eingesetzt wird.

Das Verfahren gemäß der Erfindung wird im folgenden am Beispiel der Herstellung von Polyphenylensulfid (PPS) beschrieben, ohne jedoch darauf beschränkt zu sein.

Natriumsulfid-Trihydrat wird im Titanautoklaven zunächst durch Erwärmen in NMP bei 180 °C gelöst. Anschließend wird ein Teil des Hydratwassers abdestilliert bis eine Innentemperatur von 190 °C erreicht ist. Der Autoklaveninhalt wird weiter erwärmt und bei einer Temperatur von 215 - 220 °C wird p-Dichlorbenzol (DCB) zudosiert. Das Präpolymer wird nun in einer Reaktionszeit von 30 min bis 1 h bei 230 °C gebildet. Nach dieser ersten Reaktionsphase werden beide Reaktionspartner kontinuierlich oder portionsweise über einen Zeitraum von ca. 1 h zudosiert. Das molare Verhältnis der Komponenten (Sulfid : DCB: NMP) nach beendeter Zugabe beträgt typischerweise 1:1,05: 2,8. Während der Reaktion steigt der Innendruck des Reaktors an, da chemisch gebundenes Wasser freigesetzt wird. Es hat sich als vorteilhaft erwiesen, den Wassergehalt der Reaktionsmischung zu kontrollieren. Eine Möglichkeit besteht darin, den Innendruck des Reaktors auf Werte zwischen 2 und 6 bar zu begrenzen. Dies läßt sich dadurch erreichen, daß der Gasraum des Reaktors in einen Kühler teilweise entspannt wird. Nach beendeter Zugabe wird das Reaktionsgemisch noch 1 bis 2 Stunden bei 230 bis 235 °C gerührt. Die Reaktionsmischung wird gegebenenfalls nach Verdünnung mit Lösungsmittel abgekühlt und filtriert. Der Filterkuchen aus PPS und Kochsalz wird mehrfach mit Wasser aufgekocht und filtriert und anschließend getrocknet.

Die Schmelzpunkte der Polyphenylensulfide liegen zwischen 270 °C und 305 °C, typisch sind 280 bis 295 °C. Die Schmelzviskosität liegt im Bereich von 5000 bis 500000 mPas (centiPoise), bevorzugt bei 50000 bis 250000 mPas (centiPoise). Die Schmelzviskosität ist ohne Zusätze stabil: Bei 300 °C verändert sie sich über einen Zeitraum von 1 Stunde um weniger als 10%.

Die nach dem Verfahren gemäß der Erfindung hergestellten Polyarylensulfide, insbesondere Polyphenylensulfid, zeichnen sich durch eine hohe Reinheit und hohe Qualität aus. Besonders bemerkenswert ist die Eigenschaft, daß die Polymere praktisch keinen Geruch und keine Verfärbung aufweisen. Auch weisen die Polymere ein günstiges Verhalten bei thermischer Belastung auf.

Die gemäß der Erfindung hergestellten Polyarylensulfide lassen sich durch Schmelzextrusion zu Formkörpern verarbeiten. Aber auch Folien und Fasern mit guten mechanischen Eigenschaften lassen sich herstellen.

Das neue Verfahren hat eine Reihe von Vorteilen:
- Es wird eine eingesetzte Lösungsmittelmenge von höchstens 300 g Lösungsmittel pro Mol eingesetzten Sulfids und damit eine gute Raum-Zeit-Ausbeute erreicht.
- Die Gesamt-Reaktionszeit beträgt weniger als 5 Stunden.
- Die Reaktionstemperatur liegt nicht höher als 250 °C oder sogar wesentlich darunter, was Nebenreaktionen, die mitunter zu toxischen Verunreinigungen des Polymers führen, zurückdrängt.
- Das Polymer wird in einer Ausbeute von mindestens 90 %, typischerweise 95 %, bezogen auf die eingesetzte Sulfidmenge in der Gesamtreaktion erhalten.

Die folgenden Beispiele sollen die Erfindung erläutern:

### Beispiel 1.

In einem 2 I Titanautoklaven werden 284 g Natriumsulfid-Trihydrat (ca. 60 %ig; 2,2 Mol) in 780 g NMP bei 180 °C gelöst. Anschließend werden ca. 130 ml Kondensat abdesti4liert. Der Autoklav wird auf 230° C erhitzt und ab 215° C erfolgt die Zugabe von 418 g DCB (1,3 x 2,2 Mol), warm gelöst in 220 g NMP mit einer Rate von 20 ml / min. Danach wird 1h bei 230 °C präpolymerisiert und der Autoklav wird auf Normaldruck entspannt. Während dieser Phase der Präpolymerisation beträgt das molare Verhältnis von NMPISulfid = 4,6. Zu dem noch heißen Autoklaveninhalt werden dann 250 g Natriumsulfid-Trihydrat (60 %; 2 Mol) gegeben und ein Gemisch aus Wasser, DCB und NMP abdestilliert bis die Innentemperatur ca. 190 °C erreicht hat. Der Ansatz wird dann auf 230°C erwärmt und weitere 360 g DCB in 180 ml NMP mit einer Rate von 20 ml/min zudosiert. Schließlich wird der Ansatz 1,5 h bei 230 °C auspolymerisiert, wobei jetzt das molare Verhältnis NMP/Sulfid = 2,85 beträgt. Es wird mit ca. 300 ml NMP verdünnt und abgekühlt. Die kristalline Reaktionsmasse wird abfiltriert, der Rückstand mehrmals in Wasser aufgekocht, abfiltriert und getrocknet. Ausbeute an PPS-Polymer: 410 g (95% d.Th.) Die mittlere Molmasse des Polymers beträgt M_{W} = 20000 g/mol.

### Beispiel 2

In einem 2 I Titanautoklaven werden 230 g Natriumsulfid-Trihydrat (ca. 60 %ig; 1,8 Mol) in 700 g NMP bei 180°C unter Rühren gelöst Anschließend werden ca. 95 ml Kondensat abdestilliert. Der Autoklav wird auf 230°C erhitzt und ab 215°C werden 418 g DCB (1,3 x 2,2 Mol), warm gelöst in 135 g NMP, zugegeben mit einer Rate von 20 ml / min. Danach wird der Autoklaveninhalt 1 h bei 230°C gehalten. Während dieser Phase der Präpolymerisation beträgt das molare Verhältnis von NMP/Sulfid = 4,6. Der Autoklav wird auf Normaldruck entspannt und zu dem noch heißen Autoklaveninhalt werden dann 192 g Natriumsulfid-Trihydrat (60 %; 1,5 Mol) gegeben und ein Gemisch aus Wasser, DCB und NMP abdestilliert bis die Innentemperatur ca. 190°C erreicht hat. Der Ansatz wird dann auf 230°C erwärmt und weitere 227 g DCB in 102 ml NMP mit einer Rate von 20 ml/min zugegeben. Schließlich wird der Ansatz 2,5 bei 230°C auspolymerisiert, wobei jetzt das molare Verhältnis NMP/Suffid = 2,85 beträgt. Es wird mit ca. 300 ml NMP verdünnt und abgekühlt. Die kristalline Reaktionsmasse wird abfiltriert, der Rückstand mehrmals in Wasser aufgekocht, abfiltriert und getrocknet. Ausbeute an PPS-Polymer: 410 g (95 % d.Th.). Die Schmelzviskosität beträgt bei 310°C und einer Scherrate von 1000 min ⁻¹ 12 Pas, was einer mittleren Molmasse von M_{W} = 20000 g/mol entspricht.

### Vergleichsbeispiel

Das folgende Beispiel zeigt, daß bei nicht erfindungsgemäßer Reaktionsführung niedermolekulare Polymere in schlechter Ausbeute entstehen.

In einem 2 I Titanautoklaven werden 420 g Natriumsulfid-Trihydrat (ca. 60 %ig; 3,2 Mol) in 780 g NMP bei 180 °C gelöst. Anschließend werden ca. 170 ml Kondensat abdestilliert. Der Autoklav wird auf 230° C erhitzt und ab 215° C erfolgt die Zugabe von 610 g DCB (1,3 x 3,2 Mol) warm gelöst in 320 g NMP mit einer Rate von 20 ml / min. Danach wird noch 2h bei 230 °C gerührt und der Autoklav wird auf Normaldruck entspannt, mit ca. 300 ml NMP verdünnt und abgekühlt. Die kristalline Reaktionsmasse wird abfiltriert, der Rückstand mehrmals in Wasser aufgekocht, abfiltriert und getrocknet. Ausbeute an PPS-Polymer: 290 g (85% d.Th.). Die mittlere Molmasse des Polymeren beträgt M_{W} = 7000 g/mol

## Patentansprüche

1. Verfahren zur Herstellung von Polyarylensulfiden, aus mindestens einem Sulfid und mindestens einer aromatischen Dihalogenverbindung in einem Lösungsmittel, wobei
a) eine Mischung aus aromatischer Dihalogenverbindung und Sulfid polymerisiert wird,
b) zu der polymerisierten Mischung aromatische Dihalogenverbindung und Sulfid zugegeben werden und
c) die Reaktionsmischung weiter polymerisiert wird und
das Verhältnis von Lösungsmittel zu eingesetztem Sulfid bei Abschluß der Reaktion höchstens 300 g pro Mol Sulfid oder das molare Verhältnis von Lösungsmittel zu eingesetztem Sulfid bei Abschluß der Reaktion höchstens einen Wert von 3 erreicht.

2. Verfahren nach Anspruch 1, wobei vor der Zugabe von aromatischer Dihalogenverbindung und Sulfid zu der polymerisierten Mischung der Umsatz bezogen auf Sulfid in Schritt a) einen Wert im Bereich von 10 bis 98% erreicht hat.

3. Verfahren nach Anspruch 1 oder 2, wobei vor der Zugabe von aromatischer Dihalogenverbindung und Sulfid zu der polymerisierten Mischung der Umsatz bezogen auf Sulfid in Schritt a) einen Wert im Bereich von 30 bis 95% erreicht hat.

4. Verfahren nach einem oder mehreren der Ansprüche 1 bis 3, wobei vor der Zugabe von aromatischer Dihalogenverbindung und Sulfid zu der polymerisierten Mischung der Umsatz bezogen auf Sulfid in Schritt a) einen Wert im Bereich von 50 bis 80%, erreicht hat.

5. Verfahren nach einem oder mehreren der Ansprüche 1 bis 4, wobei aromatische Dihalogenverbindung und Sulfid kontinuierlich zu der polymerisierten Mischung von Schrift a) gegeben werden.

6. Verfahren nach einem oder mehreren der Ansprüche 1 bis 5, wobei die in Schritt b) zugesetzte Masse von aromatischer Dihalogenverbindung und Sulfid das 0, 1 bis 10 fache der in Schritt a) eingesetzten Masse von aromatischer Dihalogenverbindung und Sulfid beträgt.

7. Verfahren nach einem oder mehreren der Ansprüche 1 bis 6, wobei als Lösungsmittel N-Methylpyrrolidon verwendet wird.

8. Verfahren nach einem oder mehreren der Ansprüche 1 bis 7, wobei die Reaktionstemperatur in den Schritten a), b) und c) nicht mehr als 250 °C beträgt.

9. Verfahren nach einem oder mehreren der Ansprüche 1 bis 8, wobei die Summe der Reaktionszeiten der Schritte a), b) und c) nicht mehr als fünf Stunden beträgt.

## Claims

1. A process for preparing polyarylene sulfides, from at least one sulfide and at least one aromatic dihalogen compound in a solvent, where
a) a mixture of aromatic dihalogen compound and sulfide is polymerized,
b) aromatic dihalogen compound and sulfide are added to the polymerized mixture and
c) the reaction mixture is polymerized further, and
the ratio of solvent to sulfide employed, at the end of the reaction, reaches not more than 300 g per mole of sulfide or the molar ratio of solvent to sulfide employed, at the end of the reaction, reaches a value of not more than 3.

2. The process as claimed in claim 1, where, before the addition of aromatic dihalogen compound and sulfide to the polymerized mixture, the conversion in step a), based on sulfide, has reached a value of from 10 to 98%.

3. The process as claimed in claim 1 or 2, where before the addition of aromatic dihalogen compound and sulfide to the polymerized mixture the conversion in step a), based on sulfide, has reached a value of from 30 to 95%.

4. The process as claimed in one or more of claims 1 to 3, where before the addition of aromatic dihalogen compound and sulfide to the polymerized mixture the conversion in step a), based on sulfide, has reached a value of from 50 to 80%.

5. The process as claimed in one or more of claims 1 or 4, where aromatic dihalogen compound and sulfide are continuously added to the polymerized mixture from step a).

6. The process as claimed in one or more of claims 1 to 5, where the weight of aromatic dihalogen and sulfide added in step b) is from 0.1 to 10 times the weight of aromatic dihalogen compound and sulfide added in step a).

7. The process as claimed in one or more of claims 1 to 6, where N-methylpyrrolidone is used as solvent.

8. The process as claimed in one or more of claims 1 to 7, where the reaction temperature in steps a), b) and c) is not above 250°C.

9. The process as claimed in one or more of claims 1 to 8, where the total of the reaction times of steps a), b) and c) is not more than 5 hours.

## Revendications

1. Procédé de préparation de polysulfures d'arylène à partir d'au moins un sulfure et d'au moins un composé dihalogéné aromatique dans un solvant, dans lequel
a) un mélange d'un composé dihalogéné aromatique et d'un sulfure est polymérisé,
b) un composé dihalogéné aromatique et un sulfure sont ajoutés au mélange polymérisé et
c) le mélange réactionnel est davantage polymérisé, et
le rapport entre le solvant et le sulfure utilisé à la fin de la réaction atteint au plus 300 g par mole de sulfure ou le rapport molaire entre le solvant et le sulfure utilisé à la fin de la réaction atteint au plus une valeur de 3.

2. Procédé selon la revendication 1, dans lequel avant l'addition du composé dihalogéné aromatique et du sulfure au mélange polymérisé, le taux de conversion par rapport au sulfure dans l'étape a) a atteint une valeur dans la plage de 10 à 98 %.

3. Procédé selon la revendication 1 ou 2, dans lequel avant l'addition du composé dihalogéné aromatique et du sulfure au mélange polymérisé, le taux de conversion par rapport au sulfure dans l'étape a) a atteint une valeur dans la plage de 30 à 95 %.

4. Procédé selon l'une quelconque ou plusieurs des revendications 1 à 3, dans lequel avant l'addition du composé dihalogéné aromatique et du sulfure au mélange polymérisé, le taux de conversion par rapport au sulfure dans l'étape a) a atteint une valeur dans la plage de 50 à 80 %.

5. Procédé selon l'une quelconque ou plusieurs des revendications 1 à 4, dans lequel le composé dihalogéné aromatique et le sulfure sont ajoutés en continu au mélange polymérisé de l'étape a).

6. Procédé selon l'une quelconque ou plusieurs des revendications 1 à 5, dans lequel la masse de composé dihalogéné aromatique et de sulfure ajoutée dans l'étape b) est de 0,1 à 10 fois la masse de composé dihalogéné aromatique et de sulfure utilisée dans l'étape a).

7. Procédé selon l'une quelconque ou plusieurs des revendications 1 à 6, dans lequel la N-méthylpyrrolidone est utilisée en tant que solvant.

8. Procédé selon l'une quelconque ou plusieurs des revendications 1 à 7, dans lequel la température de réaction dans les étapes a), b) et c) n'est de pas plus de 250°C.

9. Procédé selon l'une quelconque ou plusieurs des revendications 1 à 8, dans lequel la somme des temps de réaction des étapes a), b) et c) n'est de pas plus de cinq heures.
